Europäsches Patentamt

European Patent Office

Office européen des brevets

(19)

(11) Publication number: **0 180 152**
**A2**

(12) # EUROPEAN PATENT APPLICATION

(21) Application number: 85113541.8

(22) Date of filing: 24.10.85

(51) Int. Cl.⁴: **G 06 K 7/14**, G 06 K 7/016

(30) Priority: 24.10.84 JP 221970/84

(43) Date of publication of application: 07.05.86
Bulletin 86/19

(84) Designated Contracting States: DE FR GB

(71) Applicant: **Kabushiki Kaisha Sato, 15-5, 1-chome,
Shibuya, Shibuya-ku Tokyo (JP)**

(72) Inventor: **Ohta, Masataka, 1349-5, Nakanoshima
Tama-ku, Kawasaki-shi Kanagawa-ken (JP)**

(74) Representative: **Patentanwälte Grünecker, Kinkeldey,
Stockmair & Partner, Maximilianstrasse 58,
D-8000 München 22 (DE)**

(54) **Bar code reading method and apparatus.**

(57) In a bar code reading apparatus, comparison reference values are calculated on the basis of zone values that correspond to the width of bar and space zones making up a bar code pattern, and prestored constants, the width of the said zones being determined thereby. This eliminates the need to scan the bar code pattern at a constant rate, and provides accurate readings even when there are printing variations in the width and sharpness of the pattern elements.

## BACKGROUND OF THE INVENTION

### Field of the Invention

The present invention relates to a method of reading bar codes and an apparatus therefor, and particularly to a method of reading bar codes and an apparatus therefor wherein the speed at which an optical reader scans the bar code does not require to be limited, while still assuring the accuracy with which they are read.

### Description of the Prior Arts

There exist different kinds of bar codes; Figs. 12 to 15 show some typical bar codes in current use. Specifically, Fig. 12 shows a bar code which is composed of thin and thick printed bars and thin and thick spaces. Thick bars and spaces represent binary "1" whereas thin bars and spaces represent binary "0". Fig. 13 shows a bar code which is composed of thin and thick printed bars and thin spaces. Thick bars represent binary "1", and thin bars represent binary "0"; spaces, however, have no significance as data. Fig. 14 shows a bar code which is composed of thin and thick spaces and thin printed bars. Thick spaces represent binary "1", and thin spaces represent binary "0", while the bars have no significance as data. Finally, Fig. 15 shows a bar code which is employed for the J.A.N., UPC and WPC. In this bar code a numerical character is composed of seven modules of equal width. These seven modules form two bars and two spaces, and each bar module represents binary "1" whereas each space module represents binary "0".

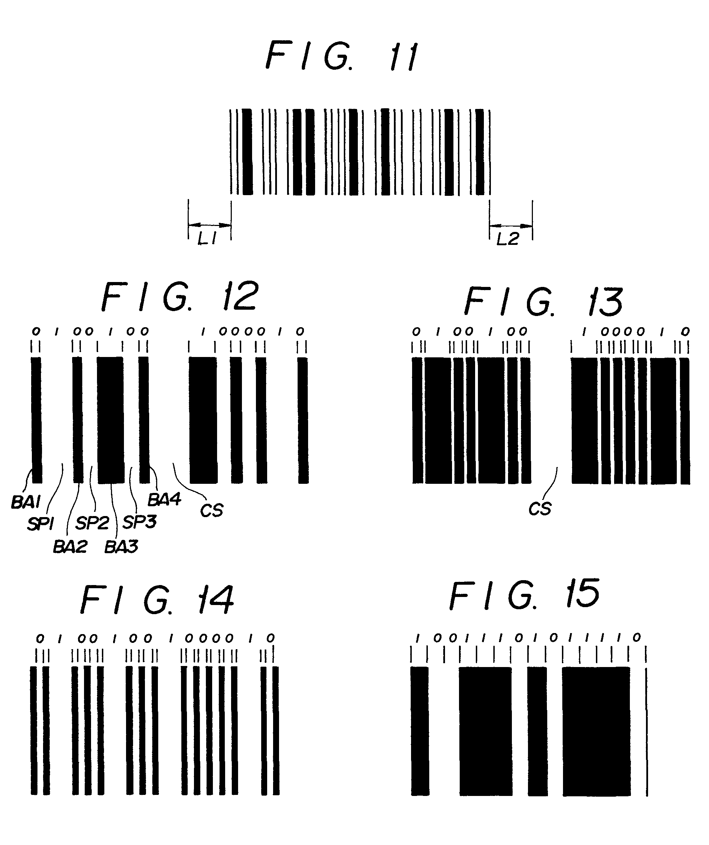

The portions of the bar code indicated by CS in Figs. 12 and 13 represent the space between characters. No inter-character spaces, however, appear in Figs. 14 and 15.

Different methods have been employed for reading these bar codes. A first reading method comprises the steps of scanning the code pattern with an optical reader to obtain numerical counts representing bar and space widths, and comparing the obtained counts with a fixed reference value to determine the binary digits represented thereby.

A second reading method appropriate for reading such a bar code as shown in Fig. 12 comprises the steps of: scanning the bar code with an optical reader to count bar and space widths sequentially, comparing the count of the bar width which the optical reader reads first with the count of the space width adjacent to the first bar to determine the binary digit represented by the first bar; or, likewise, comparing the count of the space width which the optical reader reads first, with the count of the bar width adjacent to the first space to determine the binary digit represented by the space, and so on.

The first reading method uses a fixed reference value, and the count corresponding to the bar and space widths varies with the speed at which the optical reader scans the combinations of bars and spaces. In this connection the speed at which the optical reader scans the bar codes must be controlled within certain limits, otherwise there will be considerable reading error.  Such reading errors have been particularly high with manual sweeping.

As for the second reading method, theoretically it cannot be used to read such a bar code as shown in Fig. 15. In reading the bar code of Fig. 15 the counts of bar and space widths are sequentially compared with each other to determine the binary digits represented thereby.  Therefore, if the printing should be somewhat blurred, an optical reader will read a wrong content from the blurred pattern. In an attempt to solve these problems, a reading method which is deemed to be most appropriate for reading bar codes as shown in Fig. 12 has been proposed in Japanese Laid-Open Patent Application No. 57-34540 (Patent Application No. 47-113058).  In the reading method as proposed, bars are selected and compared with each other in terms of their widths, and likewise spaces are selected and compared with each other in terms of their widths.  Specifically, the counts of two subsequent bar widths are compared with each other to determine which one is larger in value, and then the larger one (or thicker bar) is deemed to represent binary "1" whereas the smaller one (or thinner bar) is deemed to represent binary "0".  Likewise, two subsequent space widths are compared with each other to determine which one is larger in value, and then the larger one (or wider space) is deemed to represent binary "1" whereas the smaller one (or thinner space) is deemed to represent binary "0".

The proposed method, however, requires that subsequent bars (or spaces) be different in width. In order to meet this requirement a variety of bar and space widths must be used. This, however, makes it difficult to increase the density with which bars are printed or to reduce the bar code to a simpler form. In an attempt to solve this problem the inventor of Laid-Open Patent Application No. 57-34540 mentioned earlier made another invention (Patent Application Laid-Open No. 55-49354; Patent Application No. 48-34732). This invention can be applied to a bar code composed of bars (or spaces) of equal width to determine binary digits represented by bars (or spaces) with accuracy. Specifically, according to this new method the width of a bar (or space) selected as a standard is defined as a first value; the value of a bar (or space) width to be determined is multiplied by a constant K which is larger than one, and the multiplied count is defined as a second value; the object count is divided by K and is defined as a third value; and then a determination as to which binary number the object bar (or space) represents, zero or one, is made as follows:

(1)      if the first value is larger than the second value, the object bar (or space) is thin, and it represents binary "0";

(2)      if the first value is smaller than the third value, the object bar (or space) is thick, and it represents binary "1"; and

(3)     if the first value is smaller than the second value but larger than the third value, the standard bar and the object bar are deemed to be equal in width, and a binary determination is deferred until the comparison of the counts of the next bar and space widths is completed.

The third reading method which is a combination of the two reading methods submitted for patent, is free of the disadvantage of having to control the sweeping speed of the optical reader, and of erroneous reading which would be otherwise caused by blurring in the printing.

It does however have the following defect:

Assuming that the width ratio of thin bar (or space) to thick bar (or space) is equivalent to 1 : 2, and that the most appropriate value for the constant "K" is 1.5; and again, assuming that a thick bar is partly blurred or defective so that the width ratio is equal to about 1 : 1.4, in this case the first value = N = 1; the second value = $1.4NK = 2.10N$; and the third value = $1.4N/K = 0.93N$, where "N" stands for the value of width at the ratio of one. As a consequence, the second value > the first value > the first value appears instead of the correct second value > the third value > the first value.  The same error appears in respect of spaces, too.  Also disadvantageously, the third reading method cannot be applied to a bar code as shown in Fig. 15, as is the case with the second reading method.

A reading method which is exclusively applied to a bar code of Fig. 15 comprises the steps of: obtaining a value corresponding to the width of a single module by scanning a start bar (not shown) with an optical reader, and making a decision as to which element (bar or space) each subsequent module belongs to, on the basis of the module value count every time an optical reader scans the module, thereby determining whether the binary number is "1" or "0".

This reading method, however, requires that an optical reader scans the code at a constant speed, and therefore erroneous readings are often caused when the optical reader is moved by hand.

As may be understood from the above, all the conventional reading methods are unsatisfactory.

### OBJECTS OF THE INVENTION

One object of the present invention is to provide a method of reading bar codes without the necessity of keeping the optical reader scanning at a constant speed, while still assuring correct readings irrespective of slight increases or decreases in bar and space widths.

Another object of the present invention is to provide an apparatus for reading bar codes without the necessity of keeping an optical reader scanning at a constant speed, while still assuring correct reading irrespective of slight increases or decreases in bar and space widths.

### OUTLINE OF THE INVENTION

In the present invention a comparison reference value is calculated from a zone value representing the width of each zone constituted by a bar or space and a given constant; each zone value is compared with the comparison reference value; and finally the width of each zone is determined from a decision as to which value is larger, the zone value or the comparison reference value.

These and other objects and advantages of the present invention will be understood from the following description which is made with reference to the accompanying drawings.

BRIEF DESCRIPTION OF THE DRAWINGS

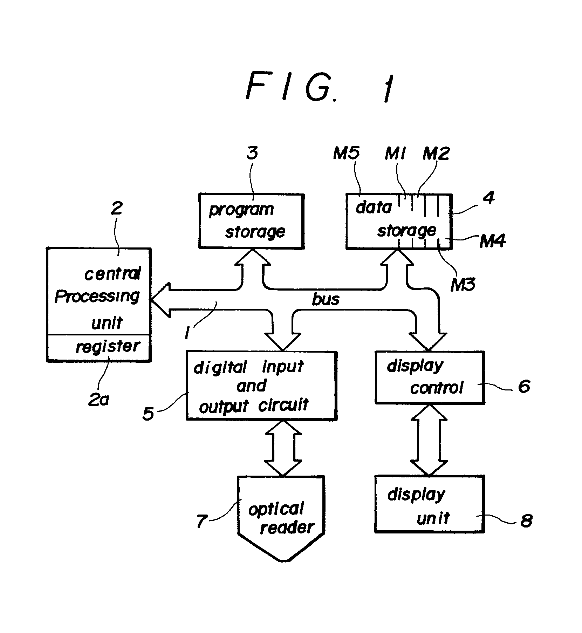

Fig. 1 is a block diagram representing a bar code reading apparatus according to the present invention;

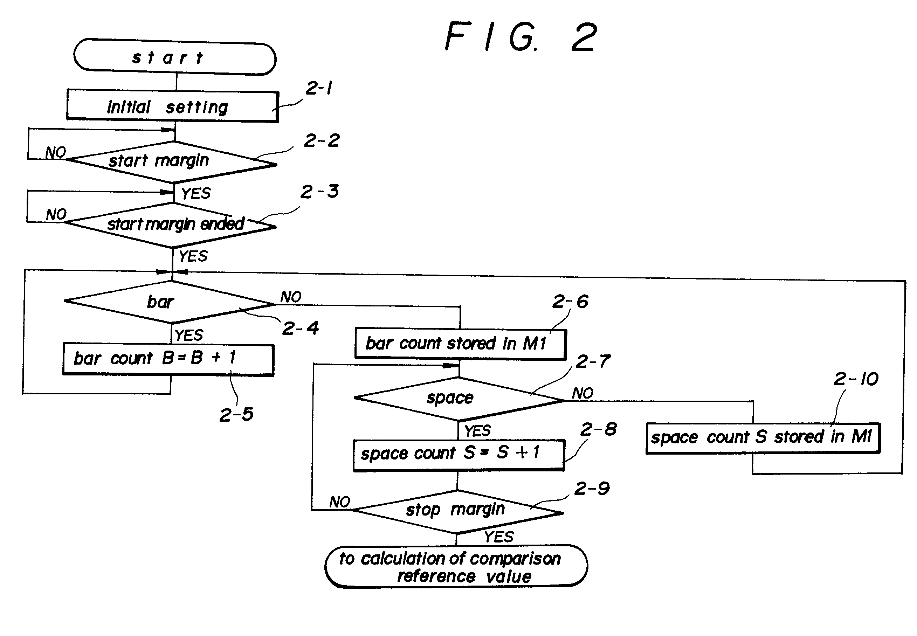

Fig. 2 is a flowchart showing the counting process;

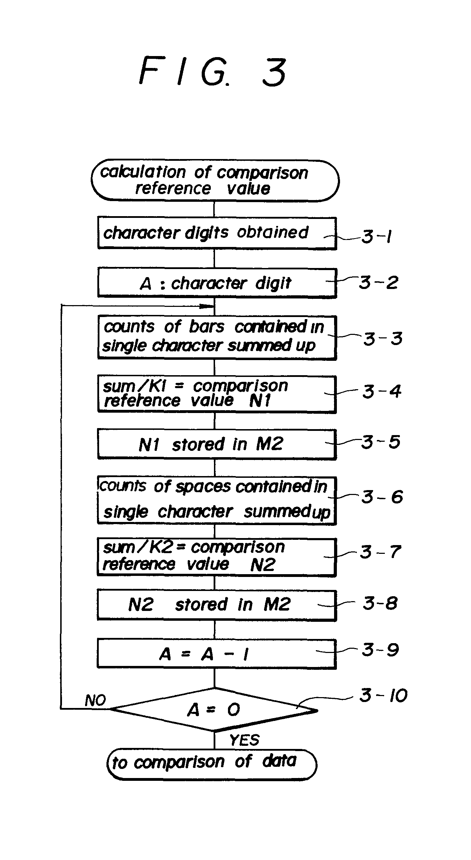

Figs. 3, 6, 7 and 9 are flowcharts showing the reference value comparison process;

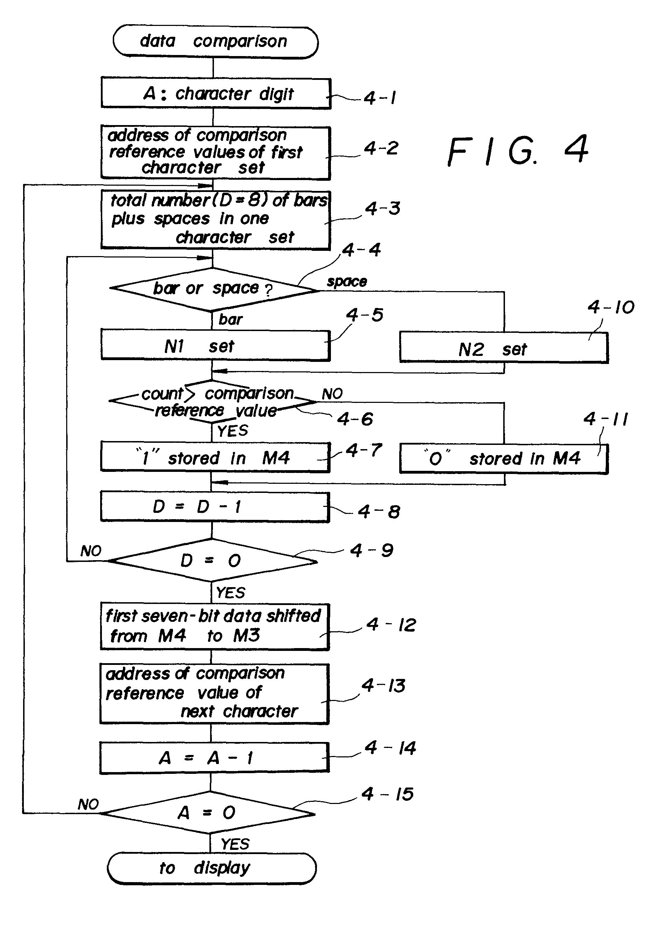

Figs. 4, 8 and 10 are flowcharts showing the read-out data comparison process;

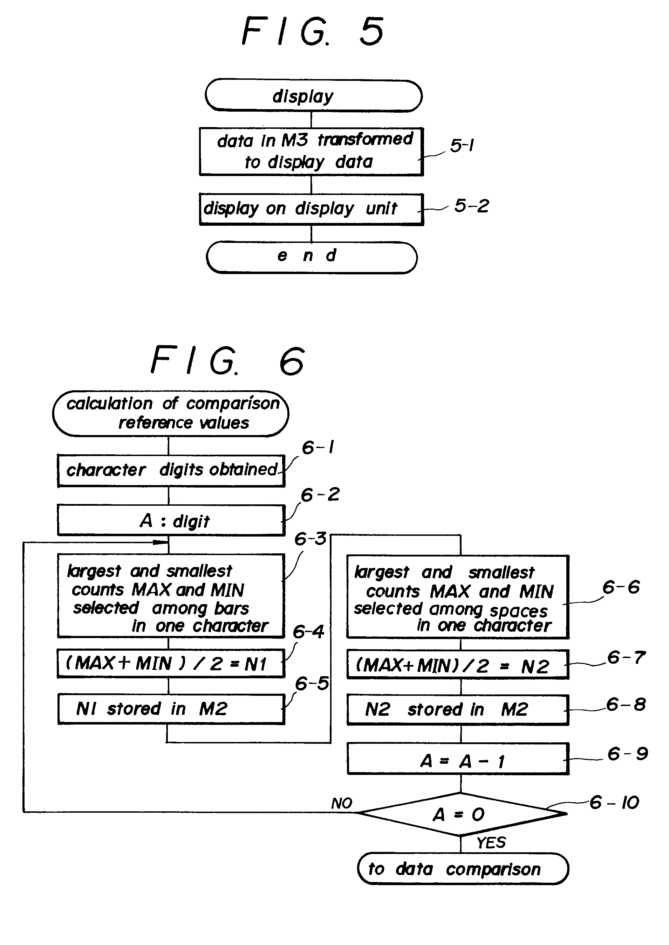

Fig. 5 is a flowchart showing the display operation process;

Fig. 11 shows a bar code; and

Figs. 12, 13, 14 and 15 show a variety of bar codes.

DESCRIPTION OF THE PREFERRED EMBODIMENTS

Preferred embodiments of the present invention will be described below with reference to Figs. 1 to 15.

In Fig. 1, a bar code reading apparatus according to the present invention comprises a central processing unit 2, a program storage 3, a data storage 4, a digital input

- 7 -

and output circuit 5 and a display control 6 all linked together by a bus 1. The central processing unit (hereinafter abbreviated to "CPU") 2 is designed to control the operation of the whole apparatus according to a program stored in the program storage 3, which is composed of a read-only memory. The data storage 4 is composed of a random access memory, including a zone width memory M1, a reference memory M2, a read-out data memory M3, a temporary memory M4 and a miscellaneous memory M5.

As shown, an optical reader 7 which is designed to be moved across bar codes by hand is connected to the digital input and output circuit 5. This circuit 5 is designed to detect which zone the optical reader is moving across, a bar zone or space zone, and supply to the bus 1 a binary signal representing which zone the optical reader is crossing. The display control 6 is designed to translate bar code data retrieved from the read-out data memory M3 to a corresponding display data, and supply them to a cathode-ray tube or any other such display means 8.

The method of reading bar codes with the aid of the reading apparatus will now be described.

The bar codes of Figs. 12 to 15 differ in their binary expression modes, as already described, and accordingly different recognition modes are employed. First, assume that the bar code of Fig. 12 contains as many numerical characters as required, thus presenting the same appearance as the one in Fig. 11. The bar code is composed of combinations of thin and thick bars and thin and thick spaces. Again, assume that the width ratio between thin bar, thick bar, thin space and thick space is 1 : 3 : 2 : 4.

Fig. 2 represents flowchart showing the sequence of steps for measuring and counting the width of each of the bar and space zones in the bar code and storing the resultant counts.

First, each unit appearing in Fig. 1 is set at its initial condition. A decision is then made as to whether or not the optical reader 7 has finished traversing the blank space corresponding to the start margin L1. In the affirmative case a decision is made as to whether or not the optical reader 7 is crossing the printed bars at Step 2-4.

If the scan of the start margin L1 has been finished, it means the optical reader 7 has started scanning the printed bars, and one is added to the bar count B registered at a predetermined address in the storage M5. While the optical reader is running across the first bar BA1, Steps 2-4 and 2-5 are repeated, thus counting the width of the first bar BA1. When the scan of the first bar BA1 has finished, the bar count B is shifted from the memory M5 to the zone width memory M1.

Next, a decision is made as to whether or not the optical reader is traversing a space. In the affirmative case one is added to the space count, and it is stored at a predetermined address in the memory M5. A decision is made as to whether or not the space count has reached the width value corresponding to the stop margin L2 as shown in Fig.

11. With a negative decision Steps 2-7 to 2-9 are repeated, thereby providing a count representing the width of the first space SP1. When the sweep of the first space SP1 has been finished, the space count S is shifted from the memory M5 to the zone width memory M1, and then the set-up reverts to Step 2-4.

In a similar way the widths of the second and subsequent bars BA2, BA3 ... are counted in Step 2-4 to Step 2-6 and the counts are stored in the zone width memory M1. On the other hand the widths of the second and subsequent spaces SP2, SP3 ... are counted in Step 2-7 to Step 2-10, and the resultant space width counts are stored in the zone width memory M1. Thus, counts representing the bar and space zone widths of the whole bar code pattern are stored. When the optical reader 7 has counted the zone width corresponding to the stop margin L2 as shown in Fig. 11, the scanning of the bar code is deemed to have finished, and the calculation of the reference value follows. It should be noted that the bar count is increased by one at each of the two Steps 2-4 and 2-5 and that the space count is increased by one at each of the three Steps 2-7, 2-8 and 2-9. In an attempt to bring bar and space counts into conformity with each other, a dummy step is preferably added to Step 2-5.

When these counting operations have been finished, the values representing the bar and space widths in the bar code are stored in the zone width memory M1, and the digit A of the characters contained in the whole bar code is determined at Step 3-1 in Fig. 3 (determination of a comparison reference value). The character digit A represents how many characters constitute the bar code, and the digit when determined is stored at a predetermined address of the memory M5.

The counts of the four bars together contained in the first character are totaled, and the total value is divided by a given constant K1 stored in the program memory 3. Thus, the comparison reference value N1 pertaining to the bars contained in the first character is obtained and stored in the reference memory M2. Next, likewise, the counts of the three spaces together contained in the first character are totaled, and the total value is divided by a given constant K2 stored in the program memory 3. Thus, the comparison reference value N2 pertaining to the spaces contained in the first character is obtained, and is stored in the reference memory M2. The value of the constant K1 is selected so that the bar-comparison reference value N1 may be an intermediate between the count of the thin bar and the count of the thick bar. Likewise, the value of the constant K2 is selected so that the space-comparison reference value N2 may be an intermediate between the count of the thin space and the count of the thick space.

As described above, the reference values N1 and N2 pertaining to the bars and spaces contained in the first character are determined, and then the character digit A of the character is decreased by one. A decision is made as to whether or not the digit A is zero. In the negative case Steps 3-3 to 3-10 are repeated, thereby determining the comparison reference values pertaining to the bars and

- 11 -

spaces contained in each of the subsequent characters.
The comparison reference value thus determined are then
stored in the reference memory M2.  On the other hand,
in the affirmative case, i.e., the digit A is zero, the
determination of the comparison reference values is deemed
to have been finished and comparison of read-out data with
the comparison reference values follows.

Comparison of bars and spaces with the bar- and
space-comparison reference values is described below with
reference to Fig. 4.

First, at Step 4-1 the character digit A, and
the addresses of the memory M2 at which the bar- and space-
comparison reference values N1 and N2 of the first character
are shifted to the memory M5 are set.  Then, the total
number (D = 8) of the bars and spaces of the first character
is put in a predetermined address of the memory M5.  As seen
from Fig. 12, the total number of the bars and spaces
contained in the character is, in fact, 7.  The number
actually set, however, is 8, by the addition of the
inter-character space CS to the actual total.

At Step 4-4 a decision is made as to which
element, bar or space, the first count stored in the zone
width memory M1 relates to.  If it is found to relate to a
bar the bar-comparison reference N1 pertaining to the bars
contained in the first character is shifted from the memory
M5 to a preselected register 2a in the CPU 2.  Then, at Step
4-6 the count of the first bar BA1 stored in the reference
memory M2 is compared with the bar-comparison reference N1

- 12 -

of the first character already put in the register 2a at Step 4-5 to determine which is larger, the first bar count or the bar-comparison reference N1. If the first bar count is found to be larger than the bar-comparison reference N1, the first bar is determined as representing binary "1". On the contrary, if the first bar count is found to be smaller than the bar-comparison reference N1, the first bar is determined as representing binary "0".

The binary digit "1" or "0" is stored in the temporary memory M4. In the example shown in Fig. 12 the first bar BA1 is thin, and therefore the bar count is smaller than the bar-comparison reference N1. Thus, a binary "0" is stored.

After D is decreased by one, a decision is made as to whether D is equal to zero at Step 4-9. If D is not zero, the set-up reverts to Step 4-4. The count of the first space SP1 is stored at the second position of the zone width memory M1. The address in the memory M5 of the space-comparison reference N2 for the first character is referred to, and then the space-comparison reference N2 is shifted from the reference memory M2 to a register 2a in the CPU 2. The second data stored in the zone width memory M1, that is, the count representing the width of the first space SP1 is compared with the space-comparison reference value N2 registered in the register 2a to determine which is larger, the first space count or the space-comparison reference value N2. If the count of the first space SP1 is larger than the space-reference value N2, the first space SP1 is

- 13 -

determined as representing binary "1", otherwise it is determined as representing binary "0". Then, binary "1" or "0" is stored in the temporary memory M4. In the example given in Fig. 12, the first space SP1 is thick, and the count thereof is larger than the space-comparison reference value N2. Thus, a binary "1" is stored, and D is decreased by one. The situation then advances to Step 4-9. The operation as described so far is repeated until all the data pertaining to the bars, spaces and inter-character space are compared with the respective references.

If D is found to be zero at Step 4-9, the first seven-bit content of the first character data stored in the temporary memory M4, that is, the data of the bars and spaces except for the inter-character space CS, is stored in the data memory M3. At Step 4-13 the address of the comparison reference value of the first character is cleared from the memory M5, and the address of the comparison reference of the subsequent character is input. Then, the character digit A is decreased by one at Step 4-14.

Next, at Step 4-15 a decision is made as to whether digit A is zero. If the decision is negative, Steps 4-3 to 4-5 are repeated, thereby performing comparisons of bar and space data of each subsequent character for determining which binary digit they represent. The data obtained as a result of these comparisons are stored in the data memory M3 in a predetermined order. When comparisons of bar and space data of every character in the bar code and storage of resultant data have been finished, the digit A reduces to zero, and the display operation as shown in Fig. 5 follows.

In the display operation seven-bit data stored in the data storage M3 at Step 5-1 are retrieved as character data, and the contents of such character data are transformed into display data, which are put in the display control 6. Finally, the display data are shown on a cathode ray tube or such display unit under the control ofthe display control 6.

The bar- and space-comparison reference values N1 and N2 in the first embodiment are calculated by summing up the bar counts of each character and dividing the sum of the bar counts by the constant K; and by summing up the space counts of each character and dividing the sum by the constant K2, respectively. These bar- and space-comparison reference values, however, can be calculated according to a different principle, which is described below in a second embodiment.

The second embodiment differs from the first embodiment only in the calculation of the bar- and space-comparison reference values. Calculation of bar and space widths, comparison of data and operation of display are similar to the corresponding ones described above with reference to Figs. 2, 4 and 5 in the first embodiment. Therefore, the description of these is omitted.

Calculation of the bar- and space-comparison reference values is conducted according to the steps shown in Fig. 6. The character digit A is obtained on the basis

- 15 -

of the data of bar and space counts stored in the zone width memory M1, and the character digit A thus obtained is put in a predetermined address of the memory M5. At Step 6-3 the largest count MAX and the smallest count MIN of the bar counts in the first character are selected. At Step 6-4 the largest and smallest counts MAX and MIN thus selected are added together, and the total is divided by two. Thus, the comparison reference value N1 pertaining to the bars contained in the first character is obtained, and is stored in the reference memory M2. At Step 6-6 the largest and smallest counts MAX and MIN of the space counts in the first character are selected. At Step 6-7 the largest and smallest counts MAX and MIN thus selected are added together, and the total is divided by two. Thus, the comparison reference value N2 pertaining to the spaces in the first character is obtained, and is stored in the reference memory M2.

Next, one is subtracted from the character digit A, and at Step 6-10 a decision is made as to whether the character digit is zero. In the case of a negative decision Steps 6-3 to 6-10 are repeated, thereby calculating the bar- and space-comparison reference values N1 and N2 pertaining to the second, third and subsequent characters. When the calculations of the comparison reference values pertaining to all the characters in the bar code have been finished, the character digit reduces to zero. Then, the set-up proceeds to the read-out data comparison, which has already been described with reference to Fig. 4.

In the example described above the bar- and space-comparison reference values N1 and N2 are determined by summing up the largest- and smallest-bar and space counts and by dividing these sums by two. However, a different calculation is possible. For example:

Assuming that a character always contains one thick bar or space, and three thin bars and/or spaces, the bar- and space-comparison reference values N1 and N2 can be calculated by adding the largest count and a count at a predetermined order among the second to fourth counts and by dividing the sum by two.

In the first and second embodiments as described above, the bar- and space-comparison reference values N1 and N2 are calculated for each character. However, one bar-comparison reference value N1 and one space-comparison reference value N2 can be used for the whole bar code. This calculation will be described below in a third embodiment.

The calculating operations as required in the third embodiment are the same as described with reference to Fig. 2 in the first and second embodiments.

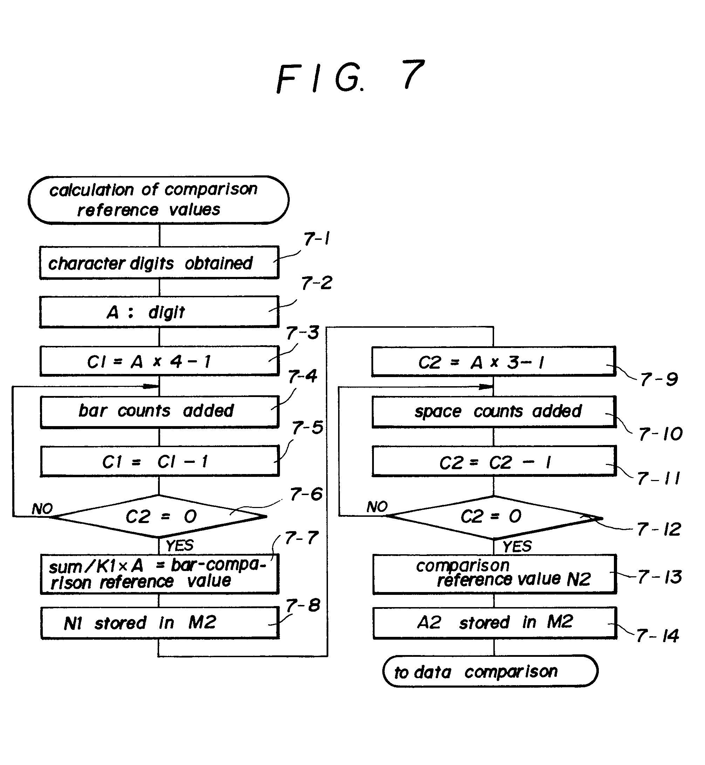

The proceedings according to which the comparison reference values are calculated are given in Fig. 7. Similarly to the examples given in Figs. 3 and 6, the character digit A is obtained and is put in a predetermined address of the memory M5. At Step 7-3 the character digit A is multiplied by the number of the bars contained in single character, that is, four, and one is subtracted from the resultant value. Thus, the number of addition times C1,

- 17 -

the value of which corresponds to the bar widths in the overall bar code, is obtained and is stored in the memory M5.

At Step 7-4 the count of the first bar and the count of the second bar are added together, and the total is put in a predetermined address of the memory M5. At Step 7-5 one is subtracted from the number of addition times $C_1$, and then at Step 7-6 a decision is made as to whether the number of addition times is zero. In the case of a negative decision the count of the next bar width is added to the summed value at Step 7-4. In this way Steps 7-4 to 7-6 are repeated, thereby carrying out the addition of the bar counts of the bars in the whole bar code pattern until the number of additions decreases to zero ($C_1 = 0$). Then, at Step 7-7 the total of the above additions is divided by the product of the constant $K_1$ and the character digit A, thereby providing the bar-comparison reference value $N_1$ of the whole bar code. At Step 7-8 this is stored in the reference memory $N_2$.

At Step 7-9 the character digit A is multiplied by the number of the spaces contained in a single character, that is, three, and one is subtracted from the resultant value, thereby providing the number $C_2$ of addition times of the space width counts in the whole bar code, which is put in a predetermined address of the memory M5.

Next, at Step 7-10 the count of the first space and the count of the second space are added together, and the resultant value is put in a predetermined address of the memory M5, and at the same time one is subtracted from the number of addition times C2. At Step 7-2 a decision is made as to whether C2 is equal to zero. If this is negative the set-up reverts to Step 7-10 where the result of additions stored in the memory M5 and the count of the next space are added together. In this way Steps 7-10 to 7-12 are repeated until the counts of all the spaces in the bar code are added together, and the result of the addition is put in a predetermined address of the memory M5. When the addition of the counts of all the spaces contained in the whole bar code has been finished (C2 = 0), the resultant total is divided by the product of the constant K2 and the character digit, thereby providing the space-comparison reference value N2. At Step 7-14 the space-comparison reference thus obtained is stored in the reference memory M2, and data comparison follows.

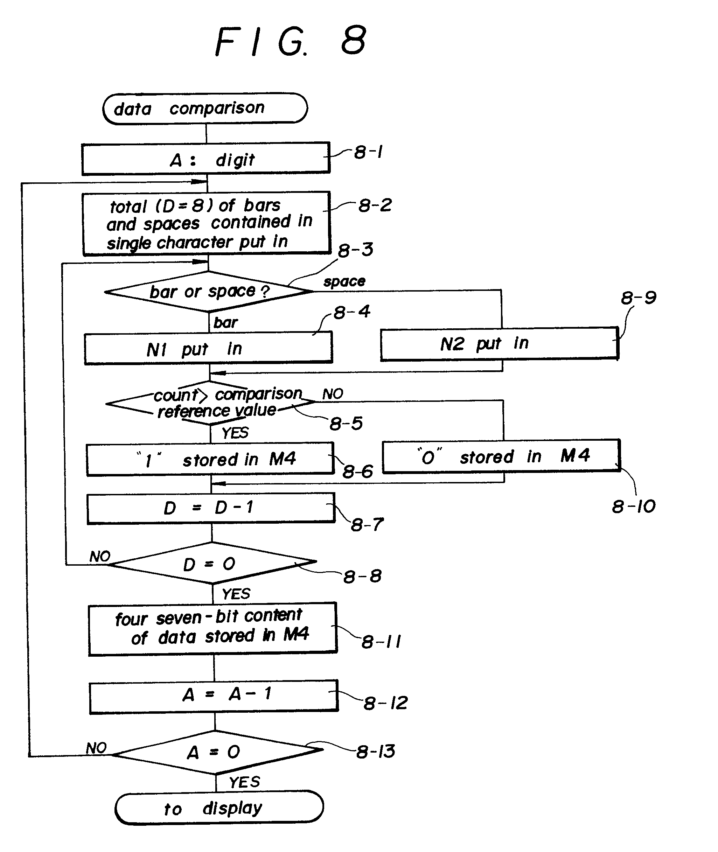

Data comparison in the third embodiment, which differs from those of the first and second embodiments, is described below with reference to Fig. 8.

First, the character digit A is put in the storage M5. At Step 8-2 the total number (D = 8) of the bars and spaces in a single character and the inter-character space (one) is put in a predetermined address of the storage M5. A decision is then made as to whether the first count stored in the zone width memory M1 relates to a bar or a space. If a bar, the bar-comparison reference value N1 is shifted from the reference memory M2 to a preselected register 2a in CPU 2, and at Step 8-5 the bar count is compared with the bar-comparison reference value N1 to decide which is larger. If the count is found to be larger than the reference value, the bar whose count has just been compared with the bar-reference value is taken as representing binary "1". If the count is found to be smaller than the reference, the bar is taken as representing binary "0". The result is stored in the temporary memory M4, and at the same time one is subtracted from D, and at Step 8-8 a decision is made as to whether D is equal to zero. In the decision is negative, the set-up reverts to Step 8-3 where a decision is made as to whether the next count stored in the zone width memory M1 relates to bar or space. If space, at Step 8-9 the space-comparison reference value N2 is shifted from the reference memory M2 to a predetermined register 2a of the CPU 2, and at Step 8-5 the space count is compared with the space-comparison reference value N2 to decide which is larger. If the count is larger than the space-comparison reference value N2, the space pertaining to the count is taken as representing binary "1". If the count is smaller than the reference value, the space is taken as representing binary "0". The result is stored in the temporary memory M4.

Thus the comparison of all the bars and spaces with their references are carried out. When the comparison finishes, D is at zero. Next, at Step 8-11 the first seven-bit portion of the read-out data stored in the temporary memory M4, that is, the part of the read-out data excluding the inter-character space CS, is stored in the read-out data storage M3. At Step 8-12 one is subtracted from the character digit A, and at Step 8-13 a decision is made as to whether the character digit A is equal to zero. If the decision is negative, Steps 8-2 to 8-13 are repeated, thereby performing the bar- and space-comparisons with regard to the second, third and subsequent characters one after the other. When the bar- and space-comparison operations have been finished for the entire bar code, the character digit A is at zero, and the display process as described above with reference to Fig. 5 follows.

The bar code reading methods according to the first, second and third embodiments as described are applied to bar codes using thin and thick bars and thin and thick spaces, thick ones representing binary "1" and thin ones binary "0" (see Fig. 12). This bar code reading method may, however, be equally well applied to a bar code using thin and thick bars and thin spaces (see Fig. 13) or thin and thick spaces and thin bars (see Fig. 14).

If it is applied to a bar code using thin and thick bars and thin spaces, the calculation of the space-comparison reference value and the space-comparison operation may be omitted. Specifically, Steps 3-6 to 3-8 may be omitted from the calculation of reference values given in Fig. 3; Steps 6-6 to 6-8 may be omitted from the calculation of reference values given in Fig. 6; and Steps 7-9 to 7-14 may be omitted from the calculation of reference values given in Fig. 7. Also, Steps 4-4, 4-10 and 4-12 may be omitted from the data comparison given in Fig. 4.

At Step 4-3 D may be set at 7, and at Steps 4-7 and 4-11 binary "1" or "0" may be stored directly in the read-out data memory M3. In the data comparison operation given in Fig. 8 Steps 8-3, 8-9 and 8-11 may be omitted, and at Step 8-2 D may be set at 7. At Steps 8-6 and 8-10 binary "1" or binary "0" may be stored directly in the read-out data memory M3.

In case of reading a bar code composed of a combination of thin bars and thick and thin spaces the calculation of the bar-comparison reference value and the bar data comparison may be omitted, as described with reference to the reading of a bar code using thin and thick bars and thin spaces.

The above embodiments are described as being applied to reading a bar code in which either bar or space can have two different widths. A bar code using either a bar or space of three or more different widths can be read if two or more reference values are calculated and used.

For example, in reading a bar code in which the bar or space has three different widths, a first reference value may be set at a value intermediate between the count of the thin element and the count of the intermediate-thick element, and a second reference value may be set at a value intermediate between the count of the intermediate-thick element and the count of the thick element. The width of each element can be determined by making decisions as to which is larger, the count of an object element or the first comparison reference, and as to which is larger, the count of an object element or the second comparison reference.

All of the above described embodiments are set out as being applied to bar codes in which thick elements represent binary "1" and thin elements represent binary "0". The bar code reading method can be applied to a bar code in which each seven-module character is composed of two bars and two spaces, each module contained in the bar representing binary "1" and each module contained in the space representing binary "0" (see Fig. 15).

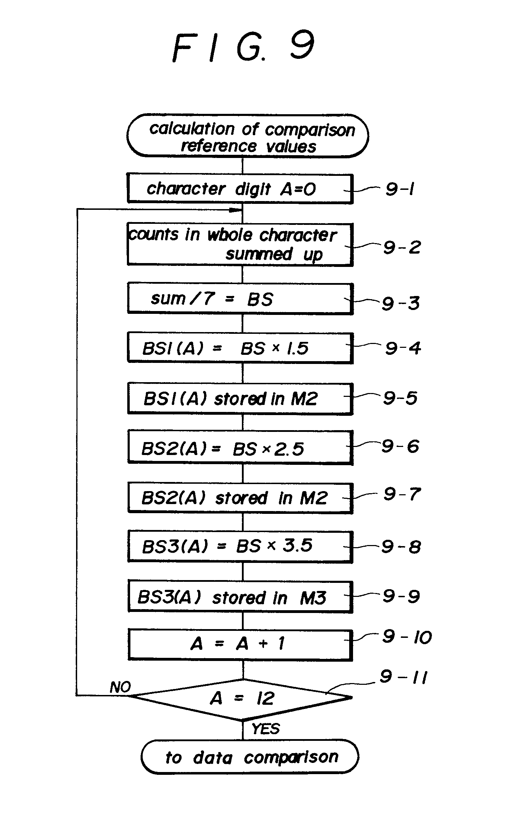

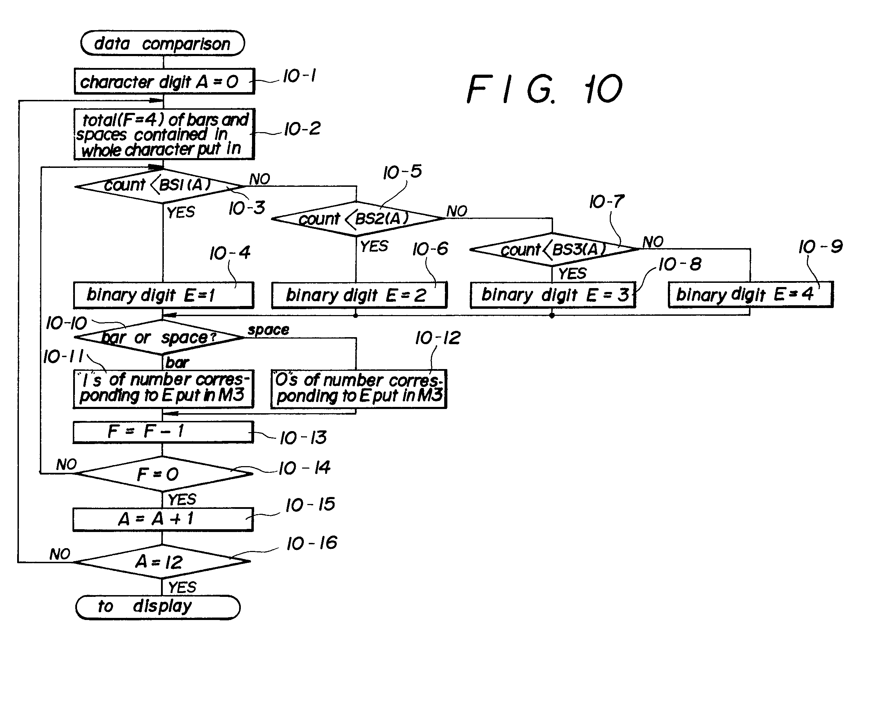

This bar code reading method is described below as being applied to such a bar code as shown in Fig. 15, with reference to Figs. 9 and 10. In this particular example bars and spaces may have different widths ranging from one to four modules.

The counting of the width of each bar and space zone is the same as described in the preceding embodiments with reference to Fig. 2. In the calculation of the reference values the character digit A (A = 0) is put in a predetermined address of the memory M5 at Step 9-1.

Next, at Step 9-2 the bar and space counts of the first character are summed up, and the total is divided by seven, thereby providing an average count BS for one module. At Step 9-4 the average count BS for one module is multiplied by 1.5, thereby providing a first comparison reference value BS1(A) intermediate between the count for one module and the count for two modules. At Step 9-5 the first comparison reference value BS1(A) is stored in the reference memory M5. Likewise, at Step 9-6 an average count BS‾for one module is multiplied by 2.5, thereby providing a second comparison reference value BS2(A) intermediate between the count for two modules and the count for three modules, and the second comparison reference is stored in the reference memory M2. At Step 9-8 the average count BS for one module is multiplied by 3.5, thereby providing a third comparison reference value BS3(A) intermediate between the count for three modules and the count for four modules, and the third comparison reference value is stored in the reference memory M2.

Next, one is added to the character digit A, and at Step 9-11 a decision is made as to whether the character digit A is equal to 12. In this particular example the character digit A is fixed at 12, and this value is stored in the memory M5 of the read-out data memory 4 or the program storage 3. When the character digit A is not found to be equal to 12, the set-up reverts to Step 9-2, where the first, second and third comparison reference values BS1(A), BS2(A) and BS3(A) for subsequent characters are calculated, and stored in the reference storage M2. In this way the calculation of the reference values for all the characters is conducted. When this is finished, the character digit a is equal to 12. Data comparison follows.

Data comparison is described with reference to Fig. 10. First, at Step 10-1 the character digit A (A = 0) is put in a predetermined address of the memory M5, and at Step 10-2 the total (F = 4) of the bars and spaces

0180152

contained in a single character is put in a preselected
address of the memory M5.

At Step 10-3 a decision is made as to which is
larger, the first count stored in the zone width memory M1
or the first comparison reference value BS1(A) for the first
character.  If the first count is found to be smaller than
the first comparison reference BS1(A), the element is
regarded as being as wide as one module, and a binary digit
E = 1 is put in a preselected address of the memory M5.
If the first count is found to be larger than the first
comparison reference BS1(A), at Step 10-5 a decision is made
as to which is larger, the first count or the second
comparison reference BS2(A).  When the first count is found
to be smaller than the second comparison reference BS2(A),
the element is regarded as being twice as wide as one
module, and a binary number E = 2 is stored in a preselected
address of the memory M5.  When the first count is found
to be larger than the second comparison reference BS2(A),
at Step 10-7 a decision is made as to which is larger, the
count or the third comparison reference value BS3(A).  When
the count is found to be smaller than the reference value,
the count is regarded as being three times as wide as one
module, and a binary number E = 3 is put in a preselected
address of the memory M5.  Otherwise, when the count is
found to be larger than the reference value, the count is
regarded as being four times as wide as one module, and a
binary number E = 4 is put in a preselected address of the
memory M5.

Next, at Step 10-10 a decision is made as to which element of bar and space the count represents. If it is found to represent a bar, the binary "1"s of the number corresponding to the value of the binary number E are stored in the read-out data memory M3. Otherwise, if it is found to represent a space, the binary "0"s of the number corresponding to the value of the binary number E are stored in the read-out data memory M3. One is then subtracted from the total F of the bars and spaces of the whole character, and at Step 10-14 a decision is made as to whether the total F is zero. In a negative case, Steps 10-3 to 10-14 are repeated, thereby carrying out comparisons of the counts of the bars and spaces of the whole character. When the comparisons of the bars and spaces in the whole character have been finished, F is at zero, and one is added to the character digit A. Then, at Step 10-16 a decision is made as to whether this character digit is 12 or not. In a negative case Steps 10-2 to 10-16 are repeated, thereby carrying out comparisons of subsequent bars and spaces in each character until all the comparisons with respect to the whole bar code have been completed, and the character digit A equals 12. The display process described earlier with reference to Fig. 5 follows.

As is well known, bars and spaces in such a bar code as shown in Fig. 15 must be well defined in the printing process. It is prescribed that the definitions of printed bars and spaces be within a certain tolerance. Therefore, in reading a bar code as shown in Fig. 15, the same comparison reference value may be applied both to bar and space comparisons. The use of one common comparison reference value is possible in reading a bar code as shown in Fig. 12, provided that the definitions of printed bars and spaces are within the tolerance limits. If printed bars are blurred beyond these limits, such a common comparison reference value cannot be used.

The bar code reading method according to the present invention is described above as being applied to the different bar codes appearing in Figs. 12 to 15. The bar code reading apparatus according to the present invention, however, can be designed to handle a selected type bar code exclusively or a variety of bar codes. In designing an all-round bar code reading apparatus it is necessary that the apparatus be capable of determining what type of bar code is to be read, and capable of carrying out the necessary calculation of comparison reference values and comparison of read-out data in a certain way appropriate for that bar code type. For example, an operator may select a switch among those which bear the words describing the types of bar codes to identify the bar code for reading by the apparatus. Or, the bar code may be partly modified so as to permit the apparatus to automatically identify the bar code. Such modifications may be made in the form of a starting code or ending code, although this is not shown in Fig. 11.

As is apparent from the above, in a bar code reading method according to the present invention a comparison reference value is calculated from a value corresponding to the width of each bar and space scanned by an optical reader and from a given content; the value corresponding to the width of each element is compared with the calculated comparison reference value to determine which is larger, the zone width or the comparison reference value; and each zone width is determined as representing a bar or a space according to the result of the comparison.

The relationship between the comparison reference value and the value corresponding to the width of each bar or space is independent of the speed at which an optical reader scans the bar code. Therefore, accurate reading is assured irrespective both of the scanning speed of the optical reader and variation in zone widths produced by blurring in the printing.

Fig. 1   0180152

1   bus

2   central processing unit

2a   register

3   program storage

4   data storage

5   digital input and output circuit

6   display control

7   optical reader

8   display unit


Fig. 2

a)   start

2-1  initial setting

2-2  start margin

2-3  start margin ended

2-4  bar

2-5  bar count B = B + 1

2-6  bar count stored in M1

2-7  space

2-8  space count S = S + 1

2-9  stop margin

b)   to calculation of comparison reference value

2-10 space count S stored in M1

Fig. 3                          0180152

c)   calculation of comparison reference value

3-1   character digits obtained

3-2   A: character digit

3-3   counts of bars contained in single character summed up

3-4   sum/K1 = comparison reference value N1

3-5   N1 stored in M2

3-6   counts of spaces contained in single character summed up

3-7   sum/K2 = comparison reference value N2

3-8   N2 stored in M2

d)    to comparison of data


Fig. 4

e)    data comparison

4-1   A: character digit

4-2   address of comparison reference values of first character set

4-3   total number (D = 8) of bars plus spaces in one character set

4-4   bar or space?

f)    bar

4-5   N1 set

4-6   count > comparison reference value

4-7   "1" stored in M4

g)    space

4-10  N2 set

4-11  "0" stored in M4

4-12 first seven-bit data shifted from M4 to M3

4-13 address of comparison reference value of next character

h)    to display


Fig. 5

i)    display

5-1   data in M3 transformed to display data

5-2   display on display unit

j)    end


Fig. 6

k)    calculation of comparison reference values

6-1   character digits obtained

6-2   A: digit

6-3   largest and smallest counts MAX and MIN selected among
      bars in one character

6-4   (MAX + MIN)/2 = N1

6-5   N1 stored in M2

6-6   largest and smallest counts MAX and MIN selected among
      spaces in one character

6-7   (MAX + MIN)/2 = N2

6-8   N2 stored in M2

l)    to data comparison

Fig. 7

m) calculation of comparison reference values

7-1 character digits obtained

7-2 A: digit

7-4 bar counts added

7-7 sum/K1 x A = bar-comparison reference value

7-8 N1 stored in M2

7-10 space counts added

7-13 comparison reference value N2

7-14 A2 stored in M2

n) to data comparison

Fig. 8

o) data comparison

8-1 A: digit

8-2 total (D = 8) of bars and spaces contained in single character put in

8-3 bar or space?

p) bar

8-4 N1 put in

8-5 count > comparison reference value

8-6 "1" stored in M4

q) space

8-9 N2 put in

8-10 "0" stored in M4

8-11 four seven-bit content of data stored in M4

r) to display

Fig. 9

s) calculation of comparison reference values

9-1 character digit A = 0

9-2 counts in whole character summed up

9-3 sum/7 = BS

9-5 BS1(A) stored in M2

9-7 BS2(A) stored in M2

9-9 BS3(A) stored in M3

t) to data comparison


Fig. 10

u) data comparison

10-1 character digit A = 0

10-2 total (F = 4) of bars and spaces contained in whole
character put in

10-3 count < BS1(A)

10-4 binary digit E = 1

10-5 count < BS2(A)

10-6 binary digit E = 2

10-7 count < BS3(A)

10-8 binary digit E = 3

10-9 binary digit E = 4

10-10 bar or space?

v) bar

10-11 "1"s of number corresponding to E put in M3

w) space

10-12 "0"s of number corresponding to E put in M3

x) to display

What is claimed is:

1. A method of reading a bar code composed of combinations of printed bars and spaces, at least one of bar and space having two or more different widths, characterized in that it comprises the steps of: storing values corresponding to the width of each bar or space zone; calculating at least one comparison reference value on the basis of the zone width values thus stored and a given constant also stored; comparing each zone width value with the calculated comparison reference; and making a binary decision on the width of each bar or space zone with reference to the result of the comparison as to which is larger, the zone width or the reference value.

2. A bar code reading method according to claim 1 wherein the bar code is a combination of bars of two or more widths and spaces of one width.

3. A bar code reading method according to claim 2 wherein said comparison reference value is calculated on the basis of bar width values selected from among the stored zone width values.

4. A bar code reading method according to claim 1 wherein said bar code is composed of a combination of printed bars and spaces with the spaces being of two or more different widths.

5. A bar code reading method according to claim 4 wherein said comparison reference value is calculated on the basis of space width values selected from among the stored zone width values.

- 1 -

6. A bar code reading method according to claim 1 wherein said bar code is composed of a combination of printed bars and spaces alternately arranged, said bars and spaces each being of two or more different widths.

7. A bar code reading method according to claim 6 wherein at least one of bar and space has three or more different widths.

8. A bar code reading method according to claim 7 wherein two or more comparison reference values are calculated for three or more different bar or space widths on the basis of the stored zone width values.

9. A bar code reading method according to claim 6 wherein one common comparison reference value to be used for both bars and spaces is calculated on the basis of the stored zone width values.

10. A bar code reading method according to claim 6 wherein the bar-comparison reference value is calculated on the basis of the stored bar zone widths, and the space-comparison reference value is calculated on the basis of the stored space zone widths.

11. A bar code reading method according to any one of claims 3, 5, 8, 9 or 10 wherein said comparison reference values are calculated for each character in the bar code.

12. A bar code reading method according to any one of claims 3, 5, 9 or 10 wherein said comparison reference values are calculated with respect to the whole bar code.

- 2 -

13.    A bar code reading method according to claim 11 or 12 wherein said comparison reference values are calculated by dividing the sum of said zone width values by a predetermined value.

14.    A bar code reading method according to claim 11 or 12 wherein said comparison reference values are calculated by adding two zone width values found in a predetermined order among said zone width values and dividing the sum by two.

15.    A bar code reading method according to claim 14 wherein said comparison reference values are calculated by adding the maximum and minimum zone width values and dividing the sum by two.

16.    An apparatus for reading a bar code composed of combinations of printed bars and spaces, at least one of said bar and space having two or more different widths, characterized in that it comprises:

a control for controlling the reading operation according to a predetermined sequence;

an optical reader for scanning each bar and space zone in said bar code;

a zone width memory for storing the values of the bar and space zones counted on the basis of the output signals from said optical reader;

a memory for storing at least one predetermined constant;

a reference memory for storing comparison reference values calculated on the basis of said zone width values and said predetermined constant; and

a data memory for storing data obtained by comparing each of said zone width values with said predetermined constant and by making a decision as to which is larger or smaller.

# F I G. 1

# F I G. 2

start

initial setting — 2-1

start margin — 2-2
NO
YES

start margin ended — 2-3
NO
YES

bar — NO
YES — 2-4

bar count B = B + 1 — 2-5

bar count stored in M1 — 2-6

space — 2-7
NO
YES

space count S = S + 1 — 2-8

space count S stored in M1 — 2-10

stop margin — 2-9
NO
YES

to calculation of comparison reference value

0180152

# F I G. 3

```
┌──────────────────────────────┐
│   calculation of comparison   │
│      reference  value          │
└──────────────────────────────┘
              │
┌──────────────────────────────┐
│   character digits obtained    │──── 3-1
└──────────────────────────────┘
              │
┌──────────────────────────────┐
│      A : character digit       │──── 3-2
└──────────────────────────────┘
              │
┌──────────────────────────────┐
│   counts of bars contained in  │──── 3-3
│   single character summed up   │
└──────────────────────────────┘
              │
┌──────────────────────────────┐
│   sum/K1 = comparison          │──── 3-4
│   reference value  N1          │
└──────────────────────────────┘
              │
┌──────────────────────────────┐
│      N1  stored in M2          │──── 3-5
└──────────────────────────────┘
              │
┌──────────────────────────────┐
│  counts of spaces contained in │──── 3-6
│  single character  summed up   │
└──────────────────────────────┘
              │
┌──────────────────────────────┐
│   sum/K2 = comparison          │──── 3-7
│   reference value  N2          │
└──────────────────────────────┘
              │
┌──────────────────────────────┐
│      N2   stored in M2         │──── 3-8
└──────────────────────────────┘
              │
┌──────────────────────────────┐
│      A = A - 1                 │──── 3-9
└──────────────────────────────┘
              │
  NO        ◇                    3-10
◁─────────< A = 0 >
            ◇
              │ YES
┌──────────────────────────────┐
│   to comparison  of  data      │
└──────────────────────────────┘
```

**F I G. 4**

```
        ( data  comparison )
                 │
    ┌────────────────────────┐
    │   A : character digit  │── 4-1
    └────────────────────────┘
                 │
    ┌────────────────────────┐
    │ address of comparison  │
    │ reference values of first │── 4-2
    │    character  set      │
    └────────────────────────┘
                 │
    ┌────────────────────────┐
    │ total number(D = 8) of bars │
    │ plus spaces in one     │── 4-3
    │    character  set      │
    └────────────────────────┘
                 │
          ╱──────────────╲        4-4
         ╱  bar or space ? ╲────── space ───┐
          ╲──────────────╱                  │
                 │ bar        4-5            │
    ┌────────────────────────┐    ┌──────────────────┐ 4-10
    │      N1   set          │    │    N2   set      │
    └────────────────────────┘    └──────────────────┘
                 │◄──────────────────────┘
          ╱──────────────╲   NO
         ╱ count  comparison ╲──────┐
         ╲ reference value   ╱  4-6 │
          ╲──────────────╱          │
                 │ YES              │
    ┌────────────────────────┐    ┌──────────────────┐ 4-11
    │  "1" stored in M4      │4-7 │  "O"  stored in M4│
    └────────────────────────┘    └──────────────────┘
                 │◄──────────────────────┘
    ┌────────────────────────┐
    │      D = D - 1         │── 4-8
    └────────────────────────┘
                 │               4-9
    NO    ╱──────────────╲
   ◄──────╱    D = O      ╲──
          ╲──────────────╱
                 │ YES
    ┌────────────────────────┐
    │ first seven-bit data shifted │── 4-12
    │    from M4   to M3     │
    └────────────────────────┘
                 │
    ┌────────────────────────┐
    │ address of comparison  │
    │ reference  value of    │── 4-13
    │    next character      │
    └────────────────────────┘
                 │
    ┌────────────────────────┐
    │      A = A - 1         │── 4-14
    └────────────────────────┘
                 │               4-15
    NO    ╱──────────────╲
   ◄──────╱    A = O      ╲──
          ╲──────────────╱
                 │ YES
        ( to  display )
```

# F I G. 5

```
┌─────────────────────────┐
│         display         │
└─────────────────────────┘
            │
┌─────────────────────────┐
│ data in M3 transformed  │──── 5-1
│    to display data      │
└─────────────────────────┘
            │
┌─────────────────────────┐
│  display on display unit│──── 5-2
└─────────────────────────┘
            │
┌─────────────────────────┐
│         e  n  d         │
└─────────────────────────┘
```

# F I G. 6

```
┌──────────────────────────────┐
│  calculation of comparison   │
│      reference values        │
└──────────────────────────────┘
                │
┌──────────────────────────────┐
│  character  digits obtained  │──── 6-1
└──────────────────────────────┘
                │
┌──────────────────────────────┐
│          A : digit           │──── 6-2
└──────────────────────────────┘
                │
┌─────────────────────┐              ┌─────────────────────┐
│ largest and smallest│── 6-3        │ largest and smallest│
│ counts MAX and MIN  │              │ counts MAX and MIN  │──── 6-6
│ selected  among bars│              │ selected among spaces│
│    in one character │              │    in one character │
└─────────────────────┘              └─────────────────────┘
          │         6-4                        │
┌─────────────────────┐              ┌─────────────────────┐
│ (MAX + MIN ) / 2 = N1│             │ (MAX+MIN)/2 = N2     │──── 6-7
└─────────────────────┘              └─────────────────────┘
          │         6-5                        │
┌─────────────────────┐              ┌─────────────────────┐
│   N1 stored in M2   │              │   N2  stored in  M2 │──── 6-8
└─────────────────────┘              └─────────────────────┘
                                                │
                                     ┌─────────────────────┐
                                     │     A = A - 1       │──── 6-9
                                     └─────────────────────┘
                                                │
                         NO         ◇                  ◇
                    ─────────────────      A = 0        ──── 6-10
                                     ◇                  ◇
                                                │ YES
                         ┌──────────────────────────────┐
                         │     to data  comparison       │
                         └──────────────────────────────┘
```

# F I G. 7

```
        ┌──────────────────────────┐
        │ calculation of comparison│
        │    reference values      │
        └──────────────────────────┘
                    │
        ┌──────────────────────────┐ 7-1
        │ character digits obtained│
        └──────────────────────────┘
                    │
        ┌──────────────────────────┐ 7-2
        │        A : digit         │
        └──────────────────────────┘
                    │
        ┌──────────────────────────┐ 7-3          ┌──────────────────────────┐
        │      CI = A x 4 - 1       │              │       C2 = A x 3- I       │ 7-9
        └──────────────────────────┘ 7-4          └──────────────────────────┘
                    │                                          │
        ┌──────────────────────────┐              ┌──────────────────────────┐
        │     bar counts added     │              │    space counts added    │ 7-10
        └──────────────────────────┘ 7-5          └──────────────────────────┘
                    │                                          │
        ┌──────────────────────────┐              ┌──────────────────────────┐
        │       CI = CI - I        │              │       C2 = C2 - I        │ 7-11
        └──────────────────────────┘ 7-6          └──────────────────────────┘
                    │                                          │
   NO     ◇    C2 = 0    ◇                  NO     ◇    C2 = 0    ◇   7-12
                    │ YES      7-7                             │ YES
        ┌──────────────────────────┐              ┌──────────────────────────┐
        │ sum/KI x A  = bar-compa- │              │ comparison               │ 7-13
        │ rison reference  value   │              │   reference value N2      │
        └──────────────────────────┘ 7-8          └──────────────────────────┘
                    │                                          │
        ┌──────────────────────────┐              ┌──────────────────────────┐
        │     NI stored in M2      │              │    A2  stored in M2      │ 7-14
        └──────────────────────────┘              └──────────────────────────┘
                                                             │
                                                  ┌──────────────────────────┐
                                                  │   to data comparison     │
                                                  └──────────────────────────┘
```

# F I G. 8

```
              ( data   comparison )
                        │
          ┌─────────────────────────────┐
          │         A :   digit         │──── 8-1
          └─────────────────────────────┘
                        │
    ┌──────▶┌─────────────────────────────┐
    │       │ total (D = 8) of bars       │──── 8-2
    │       │ and spaces  contained in    │
    │       │ single character put in     │
    │       └─────────────────────────────┘
    │                   │          ╱ 8-3
    │  ┌───▶      ◇◇◇◇◇◇◇◇◇◇◇◇◇◇◇◇◇◇     space
    │  │       ◇    bar or space ?    ◇──────────────────┐
    │  │          ◇◇◇◇◇◇◇◇◇◇◇◇◇◇◇◇◇◇                     │
    │  │              │ bar   ╱ 8-4                       │
    │  │     ┌──────────────────┐        ┌──────────────────┐
    │  │     │     N1  put  in  │        │     N2  put  in  │──── 8-9
    │  │     └──────────────────┘        └──────────────────┘
    │  │              │         ◀─────────────────┘
    │  │      ◇◇◇◇◇◇◇◇◇◇◇◇◇◇◇◇◇◇  NO
    │  │     ◇ count〉 comparison  ◇──────────────────┐
    │  │      ◇ reference value  ◇                    │
    │  │         ◇◇◇◇◇◇◇◇◇◇◇  ╱ 8-5                   │
    │  │              │ YES                            │
    │  │     ┌──────────────────┐        ┌──────────────────┐
    │  │     │ "1"  stored in M4│        │ "0"  stored in M4│
    │  │     └──────────────────┘ 8-6    └──────────────────┘
    │  │              │         ◀─────────────────┘  8-10
    │  │     ┌──────────────────┐
    │  │     │     D  =  D - 1  │──── 8-7
    │  │     └──────────────────┘
    │  │              │
    │  │ NO   ◇◇◇◇◇◇◇◇◇◇◇◇◇◇
    │  └────◇    D = O    ◇──── 8-8
    │         ◇◇◇◇◇◇◇◇◇◇◇◇◇◇
    │              │ YES
    │     ┌──────────────────┐
    │     │ four seven - bit content │
    │     │ of data stored in M4 │──── 8-11
    │     └──────────────────┘
    │              │
    │     ┌──────────────────┐
    │     │     A  =  A - 1  │──── 8-12
    │     └──────────────────┘
    │              │
    │ NO   ◇◇◇◇◇◇◇◇◇◇◇◇◇◇
    └────◇    A = O    ◇──── 8-13
          ◇◇◇◇◇◇◇◇◇◇◇◇◇◇
              │ YES
        ( to   display )
```

# F I G. 9

```
       ╭─────────────────────────╮
       │  calculation of comparison │
       │    reference values       │
       ╰─────────────────────────╯
                    │
       ┌─────────────────────────┐
       │   character digit A=O    ├──── 9-I
       └─────────────────────────┘
                    │
       ┌─────────────────────────┐
       │ counts in whole character├──── 9-2
       │     summed  up           │
       └─────────────────────────┘
                    │
       ┌─────────────────────────┐
       │     sum / 7  =  BS       ├──── 9-3
       └─────────────────────────┘
                    │
       ┌─────────────────────────┐
       │   BSI (A) =  BS × I.5    ├──── 9-4
       └─────────────────────────┘
                    │
       ┌─────────────────────────┐
       │   BSI(A) stored in M2    ├──── 9-5
       └─────────────────────────┘
                    │
       ┌─────────────────────────┐
       │   BS2(A) = BS × 2.5      ├──── 9-6
       └─────────────────────────┘
                    │
       ┌─────────────────────────┐
       │   BS2(A) stored  in M2   ├──── 9-7
       └─────────────────────────┘
                    │
       ┌─────────────────────────┐
       │   BS3(A) = BS × 3.5      ├──── 9-8
       └─────────────────────────┘
                    │
       ┌─────────────────────────┐
       │   BS3(A) stored in  M3   ├──── 9-9
       └─────────────────────────┘
                    │
       ┌─────────────────────────┐
       │     A  = A + 1           ├──── 9-10
       └─────────────────────────┘
                    │
            NO     ╱╲              9-11
       ◄──────────╱  A = I2 ╲──────
                  ╲         ╱
                   ╲╱
                    │ YES
       ╭─────────────────────────╮
       │   to data comparison    │
       ╰─────────────────────────╯
```

$BSI(A) = BS \times 1.5$

$BS2(A) = BS \times 2.5$

$BS3(A) = BS \times 3.5$

FIG. 10

flowchart:

data comparison

character digit A = 0   10-1

total(F=4) of bars and spaces contained in whole character put in   10-2

count < BS1(A)   10-3   NO →
YES ↓

count < BS2(A)   10-5   NO →
YES ↓

count < BS3(A)   10-7   NO →
YES ↓

binary digit E=1   10-4
binary digit E=2   10-6
binary digit E=3   10-8
binary digit E=4   10-9

bar or space?   10-10   space →
bar ↓

1's of number corresponding to E put in M3   10-11
0's of number corresponding to E put in M3   10-12

F = F - 1   10-13

F = 0   10-14   NO →
YES ↓

A = A + 1   10-15

A = 12   10-16   NO →
YES ↓

to display

# F I G. 11

L1    L2

# F I G. 12

0  1  00  1  00    1  0000  1  0

BA1  SP1  BA2  SP2  BA3  SP3  BA4  CS

# F I G. 13

0  1  00  1  00    1  0000  1  0

CS

# F I G. 14

0  1  00  1  00  1  0000  1  0

# F I G. 15

1  00  1  1  0  1  0  1  1  1  0